# EUROPEAN PATENT SPECIFICATION

(11) **EP 3 087 823 B1**
(45) Date of publication and mention of the grant of the patent: **28.02.2018**
(21) Application number: 16167058.3
(22) Date of filing: 26.04.2016
(51) Int. Cl.: A01D 78/10, A01D 78/12

(54) **AGRICULTURAL RAKING DEVICE**
LANDWIRTSCHAFTLICHE RECHENVORRICHTUNG
DISPOSITIF DE RATISSAGE AGRICOLE

(30) Priority: 29.04.2015 NL 2014732
(43) Date of publication of application: 02.11.2016
(73) Proprietor: Forage Innovations B.V., 3147 PB Maassluis (NL)
(72) Inventor: ARNOLD, Martin, 3147 PA Maassluis (NL); PORT, Dennis, 3147 PB Maassluis (NL); MIEDEMA, Theo, 3147 PB Maassluis (NL); EHLERS, Stephan, 3147 PB Maassluis (NL)
(74) Representative: AGCO Intellectual Property Department

(56) References cited:
- DE-U- 6 604 139
- NL-A- 7 412 051
- US-A- 4 914 901
- US-A- 4 922 700
- US-A- 5 274 990

## Description

### FIELD OF THE INVENTION

The invention relates to a haymaking machine, particularly for windrowing harvested agricultural crops, such as hay. For example, the haymaking machine is a rotary rake or rotary swather.

### BACKGROUND OF THE INVENTION

US4914901 discloses a haymaking machine comprising a frame having at least one raking wheel. The frame is connected to a three-point hitching bracket that can be coupled to the lifting device of a drive tractor. The raking wheel includes a central casing having bearings in which tool-carrying arms directed outward are housed. Each of these arms carries at its outer end tools consisting of raking teeth. The inner end of each arm is accommodated inside the casing and includes a crank equipped with a roller. The casing is guided in rotation on an approximately vertical shaft, which determines the rotation axis of the raking wheel. The casing accommodates a control cam for the tool-carrying arms. The control cam is fastened to the shaft and includes a cam surface in which the rollers of the tool-carrying arms move. The lower end of the shaft is connected to a wheel assembly which rests on the ground. The wheel assembly, shaft and control cam are connected rigidly to one another and form an assembly that can swivel around the rotation axis. During operation, when the tractor and the machine enter a curve or a turn, the wheel assembly orientates itself in the direction of movement imposed by the tractor. Simultaneously, this wheel assembly causes the shaft to pivot around the rotation axis. The shaft then automatically moves the control cam which is fastened to it. The control cam is thus constantly oriented as a function of the direction that the tractor follows. Consequently, the depositing zone where the windrow is formed can vary in relation to the frame of the machine. However, this haymaking machine does not include a swath curtain, so that the windrows formed may still be irregular and scattered, in particular in curves or a turn.

### DESCRIPTION OF THE INVENTION

It is an object of the invention to provide an improved haymaking machine, in particular for use in mountain areas.

This object is achieved by a haymaking machine, particularly for windrowing harvested agricultural crops, such as a rotary rake, the haymaking machine comprising:
- a frame having a coupling device for coupling the haymaking machine to a tractor, for example a three-point coupling device;
- at least one rotor being connected to the frame in such a manner that the rotor can be driven in rotation about a rotation axis, in particular by means of a drive shaft that can be driven by a motor of the tractor, the rotor comprising a rotor housing and a plurality of tine arms extending radially from the rotor housing and carrying tines at their outer ends,
- a shaft extending through the rotor housing and defining the rotation axis,
- a control cam arrangement, which can also be referred to as control cam, accommodated in the rotor housing and fixedly connected to the shaft, the control cam arrangement having a cam track, the tine arms being connected to the cam track such that when the rotor is driven in rotation the tine arms rotate or pivot by means of the cam track about their respective longitudinal axes so that the tine arms lift the tines carried by said tine arms in a predetermined depositing zone of a path of said tines for depositing of raked products,
- a wheel assembly fixedly attached to the shaft,
wherein the shaft, the control cam arrangement and the wheel assembly, being fixedly connected to one another, form a swivel assembly that can swivel, together and/or as a unit, about the rotation axis with respect to the frame, and
wherein the haymaking machine comprises a windrowing deflector extending next to or along the depositing zone, the windrowing deflector being fixedly connected to said swivel assembly, so that the windrowing deflector forms a part of said swivel assembly, for maintaining the windrowing deflector in a predetermined and/or stationary position and/or orientation with respect to the depositing zone when the swivel assembly swivels about the rotation axis with respect to the frame.

The haymaking machine according to the invention comprises a windrowing deflector, which can also be referred to as swath board or swath curtain. In general, a windrowing deflector extends along the depositing zone of the tines in a longitudinal direction of the haymaking machine. The windrowing deflector may collect crop delivered by the tines of the rotor. A windrowing deflector as such is known. However, contrary to known windrowing deflectors, which are generally securely fastened to the frame of the haymaking machine, the windrowing deflector according to the invention is fastened to the swivel assembly so that it swivels about the rotation axis with respect to the frame, together with the shaft, the control cam arrangement and the wheel assembly. Thereby, the windrowing deflector according to the invention is controlled in such a manner that the windrowing deflector is maintained in an optimal position and/or orientation along the depositing zone of the path of the tines irrespective of whether the tractor drives along a straight line or in curves or in a turn. When the tractor follows a curve, the wheel assembly having wheels or other supports supporting on the ground, positions the cam track of the control cam arrangement in such a manner that the depositing zone of the path of the tines is maintained substantially transversely to the curve, i.e. in the desired position and/or orientation for forming the windrow. At the same time, the wheel assembly also controls the windrowing deflector for maintaining the windrowing deflector in the desired position and/or orientation next to the depositing zone. As a result, the formed windrow is well-formed and regular in curves as well.

It is preferred according to the invention that the coupling device of the frame is configured to connect the frame to the tractor in such a manner that the frame cannot swivel outwards with respect to the tractor. The coupling device is constructed such that the frame of the haymaking machine can be fixedly connected to the tractor, at least as seen in a horizontal plane. The coupling device of the frame is designed in a non-turnable manner with respect to the tractor, i.e. the frame cannot swivel with respect to the tractor about a substantially vertical axis. As a result, the coupling device can be of a simple fixed design type, so that the weight of the haymaking machine is kept relatively low. This is particularly advantageous for use in mountain areas.

According to an embodiment of the invention, the coupling device comprises a three point attachment device mountable to a three point linkage of the tractor. For example, the three point attachment device may comprise a U-shaped headstock that on the lower end of the legs may be mounted to two lower lifting arms of the three point linkage of the tractor. The yoke of the U-shaped element may be connected to the top link. The drive shaft for driving the rotor of the haymaking machine may extend through the U-shaped headstock and is to be coupled to the tractor.

In an embodiment of the invention, the windrowing deflector comprises a deflector surface extending substantially parallel to the rotation axis, i.e. vertically when the haymaking machine rests on a horizontal ground surface. In a further embodiment of the invention, the deflector surface extends substantially tangentially with respect to the path of the tines. The deflector surface may be formed, for example, by a screen made of cloth or of sheet metal or of flexible rods placed side by side.

In a preferred embodiment of the invention, the windrowing deflector is fixedly connected to the shaft of the rotor. Thereby, the windrowing deflector can be secured to the swivel assembly in a robust and reliable manner. For example, the windrowing deflector is fixedly connected to the shaft by means of an outrigger arm which projects radially from the shaft. This is cost-effective. An inner end of the outrigger arm is secured to the shaft, whereas the outer end of the outrigger arm is fastened to the windrowing deflector. However, it is also possible according to the invention for the windrowing deflector to be connected to another part of the swivel assembly, for example the wheel assembly.

It is preferred according to the invention that the haymaking machine comprises a centring device for biasing the swivel assembly to a central position in alignment with a longitudinal direction of the frame. In the central position, the swivel assembly, in particular the wheel assembly and also the windrowing deflector, are aligned with the longitudinal direction of the frame. When the tractor moves in a straight line, the centring device prevents relatively small swivelling or oscillating movements of the rotary rake out of the central position due to irregularities in the ground. Only when the tractor enters a curve or a turn, the wheel assembly and thereby the shaft, the control cam arrangement and the windrowing deflector are swivelled together about the rotation axis.

The centring device can be constructed in a number of ways. For example, the centring device may comprise a lever being fixedly connected to the swivel assembly and projecting radially from the rotation axis, wherein said lever in the central position of the swivel assembly extends in the longitudinal direction of the frame towards the coupling device, and a pretensioning element which is pretensioned between the lever and the frame. The pretensioning element may be, for example, a spring or a hydraulic cylinder combined with an accumulator. A centring device of this type is cost-effective and reliable.

According to an embodiment of the invention, the haymaking machine may comprise a stop which is fixedly connected to the frame, wherein the outrigger arm, which fixedly connects the windrowing deflector to the shaft comprises an inner arm portion and an outer arm portion pivotally connected by means of a hinge, preferably having a pivot axis extending substantially parallel to the rotation axis of the rotor, such that, when the outrigger arm abuts against the stop due to a swivelling movement of the swivel assembly towards the coupling device, the outer arm portion pivots about the hinge with respect to the inner arm portion. As a result, the windrowing deflector is prevented from swivelling further towards the coupling device. Thereby, the windrowing deflector is prevented from colliding against a rear wheel of the tractor.

According to an embodiment of the invention, the inner arm portion and the outer arm portion of the outrigger arm may be biased towards an extended position in line with one another. For example, the inner arm portion and the outer arm portion are biased to the extended position by means of a spring. Thus, the inner arm portion and the outer arm portion of the outrigger arm are maintained in the extended position until the tractor enters such a sharp turn that the outer arm portion moves against the stop so that it is pivoted about the hinge, against the bias force, with respect to the inner arm portion. Incidentally, the bias force also causes the outer arm portion to be pivoted back into the extended position when the tractor returns to a straight line.

According to an embodiment of the invention, the wheel assembly comprises at least three or four ground supporting wheels. The lower end of the shaft of the rotary rake may be fixedly connected to a chassis with two laterally extending arms, each of which carries one or two wheels.

According to an embodiment of the invention, the tine arms are bent in such a manner that the outer end of each tine arm carrying the tines, when pivoted about its longitudinal axis so that the tines extend substantially vertically, is situated below an inner end of said tine arm being connected to the cam track. The outer end of each tine arm is lifted upwards, when the tines of said tine arm are pivoted upwards. This increases the space below the haymaking machine.

The invention further relates to a method for windrowing harvested agricultural crops using a haymaking machine as described above. This method has the same advantages as described above in respect of the haymaking machine. In particular, the windrow formed by the method according to the invention is particularly well-formed and regular in straight lines as well as in curves or a turn.

These and other aspects of the invention will be apparent from and elucidated with reference to the embodiments described hereinafter.

### BRIEF DESCRIPTION OF THE DRAWINGS

The subject-matter of the invention will be explained in more detail with reference to exemplary embodiments which are illustrated in the attached drawings.
Fig. 1 shows a perspective view of a haymaking machine according to one embodiment of the invention.
Fig. 2 shows a simplified cross-sectional view of a central part of the haymaking machine shown in Fig. 1.
Fig. 3A shows a top view of the haymaking machine of Fig. 1 in a central position.
Fig. 3B shows a detail of Fig. 3A.
Fig. 4A shows a top view of the haymaking machine of Fig. 1 in a first swung-out position.
Fig. 4B shows a detail of Fig. 4A.
Fig. 5A shows a top view of the haymaking machine of Fig. 1 in a second swung-out position.
Fig. 5B shows a detail of Fig. 5A.
Fig. 6 shows a perspective view of a haymaking machine according to another embodiment of the invention.

### DETAILED DESCRIPTION OF EXEMPLARY EMBODIMENTS

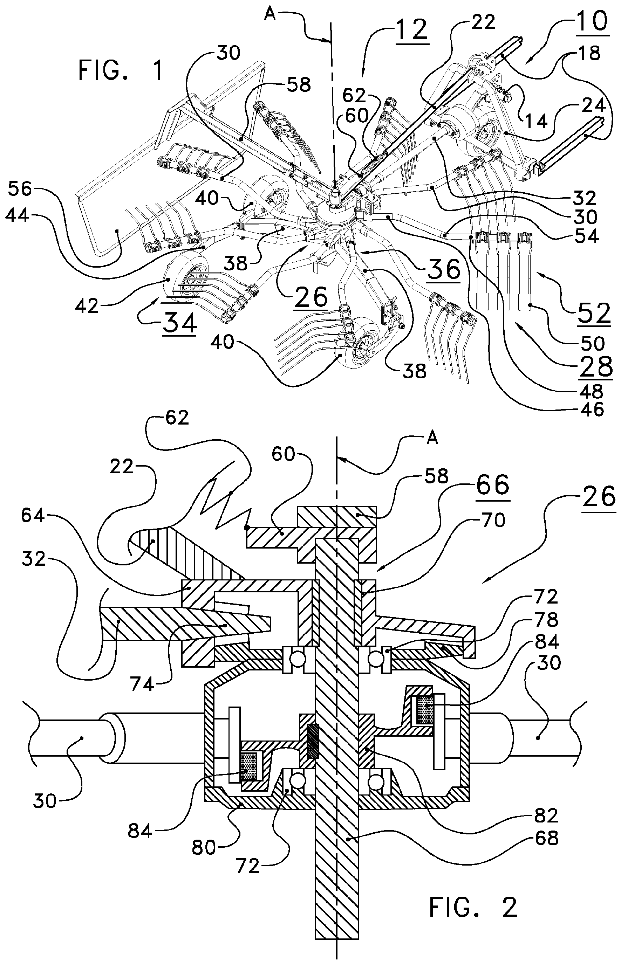

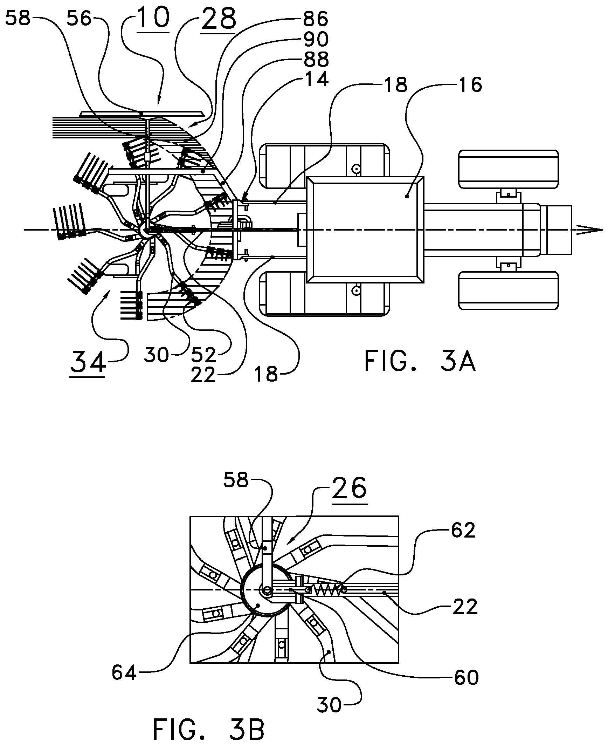

Fig. 1 shows a haymaking machine 10, particularly for windrowing harvested agricultural crops, such as grass or hay. In this exemplary embodiment, the haymaking machine 10 is a rotary rake having a single rotor 28. The haymaking machine 10 comprises a frame 12 with a U-shaped three-point coupling device 14 at a front end for mounting the haymaking machine 10 to a three-point linkage of a tractor 16 (see also figure 3A). The three-point linkage of the tractor 16 comprises two lower lifting arms 18 and a top link (not shown in Fig. 1). By means of this coupling device 14, the frame 12 of the haymaking machine 10 cannot turn about a vertical axis with respect to the tractor 16, i.e. the frame 12 cannot swivel to the left or right with respect to the tractor 16, it can only be lifted and lowered by means of the three-point linkage of the tractor 16.

The frame 12 furthermore comprises a frame beam 22 extending in a longitudinal direction from a yoke 24 of the coupling device 14 to a gear box 26 of the rotor 28. Inside the gear box 26, means for rotating the rotor 28 and for pivoting tine arms 30 of the rotor 28 are provided, which may be driven via a drive shaft 32, which, in this exemplary embodiment, extends below the frame beam 22. The drive shaft 32 can be driven in rotation by means of a motor of the tractor 16. The tine arms 30 of the rotor 28 can be driven in rotation about a rotation axis A, which extends substantially in a vertical direction when the haymaking machine 10 rests on a horizontal ground surface.

The haymaking machine 10 comprises a wheel assembly 34, which can be swivelled about the rotation axis A, independently from the rotation of the tine arms 30. The wheel assembly 34 comprises a chassis 36 with two laterally extending arms 38. The laterally extending arms 38 carry three ground supporting wheels 40, 42. The rear wheel 42 may be an adjustable steering wheel, which can be displaced towards and away from the front wheel 40 via a telescopic rod 44. One or more of the wheels 40 may be adjustable for height adjustments and/or other adjustments of the rotor 28. The wheels 40 are situated below the rotor 28.

The tine arms 30 have an inner end 46 and an outer end 48, which extend substantially horizontal. The outer end 48 carries tines 50 forming a rake 52. An intermediate portion 54 of the tine arms 30 is interconnected between the inner end 46 and the outer end 48. The intermediate portions 54 of the tine arms 30 form bended sections to increase the space between the ground and the rotor 28.

The rotor 28 furthermore comprises a windrowing deflector 56, also referred to as swath board or swath curtain. The swath curtain 56 is fixedly connected to the wheel assembly 34, as will be explained in more detail below, such that the swath curtain 56 can be swivelled about the rotation axis A together with the wheel assembly 34 with respect to the frame 12. A lever 60 is fixedly connected to a shaft 68 which extends through the gear box 26 (see figure 2). The wheel assembly 34 and the swath curtain 56 are biased to a central position by means of a spring 62 which is connected between the lever 60 and the frame beam 22. With the haymaking machine 10 in its central position (see fig. 1 and 3A), the lever 60 extends substantially in the longitudinal direction of the frame beam 22.

Fig. 2 shows a cross-sectional view of a central part of the rotor 28. The frame beam 22 is fixedly connected to a stationary cover 64, which has an opening 66, in which the shaft 68 is mounted via a friction bearing 70. The shaft 68 defines the rotation axis A. At its upper end, the shaft 68 is fixedly connected to the swath curtain 56 via an outrigger arm 58. At its lower end, the shaft 68 is fixedly connected to the chassis 36 of the wheel assembly 34 (not shown in figure 2). Thus, the shaft 68, the swath curtain 56 and the wheel assembly 34 (and also the lever 60) can swivel together about the rotation axis A with respect to the frame 12.

The cover 64 accommodates a pinion 74 at the end of the drive shaft 32, which engages a crown wheel 78 fixedly connected on top of a rotor housing 80. The rotor housing 80 accommodates a control cam arrangement 82 having a cam track, which is fixedly connected to the shaft 68. The rotor housing 80 is rotatably connected to the shaft 68 by means of roller bearings 72. When the rotor housing 80 is driven in rotation via the crown wheel 78 driven by the pinion 74, the tine arms 30, which are supported by the rotor housing 80, are rotated along their longitudinal axes by the cam track. In particular, rollers 84 at the end of the tine arms 30 are lifted and lowered by the cam track as they are guided inside the cam track. Thus, during the rotating movement of the tine arms 30 about the rotation axis A, the tine arms 30 and the tines 50 are tilted downwards and upwards for defining a predetermined depositing zone 86 of a path of the tines 50 for depositing of raked products (see fig. 3A).

The following figures show the operation of the haymaking machine 10 in curves and bends.

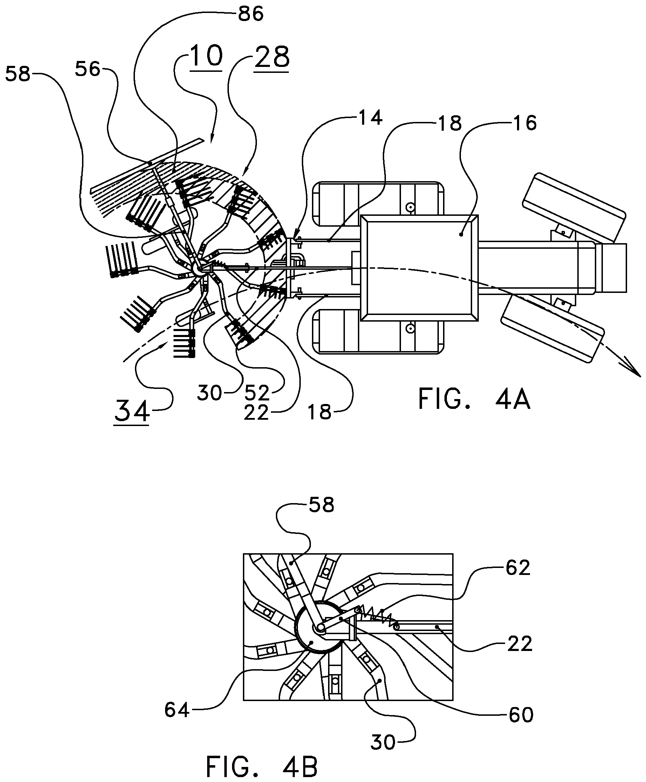

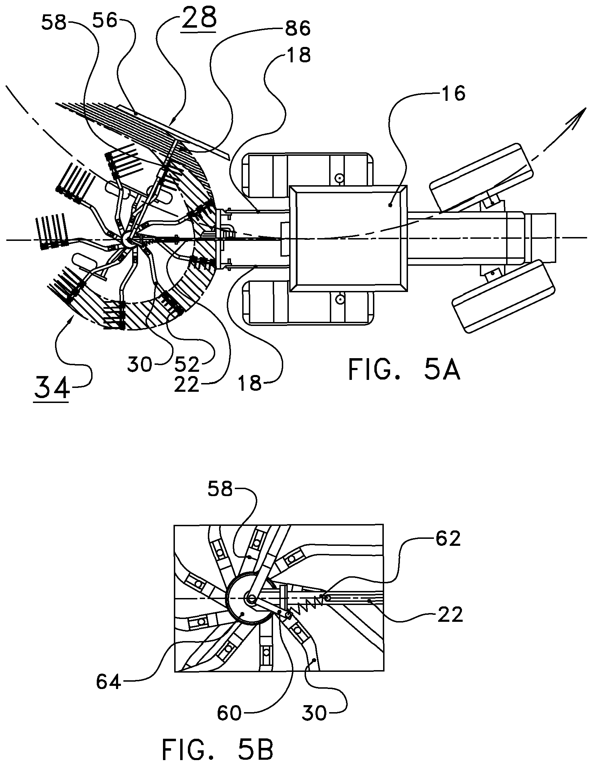

Fig. 3A shows the tractor 16 pulling the haymaking machine 10 in a straight line. The wheel assembly 34 follows the path of the tractor 16 and is aligned in the central position. In Fig. 4A, the tractor 16 has entered a curve to the right and in Fig. 5A a curve to the left. In both cases, the wheel assembly 34 is aligned in such a manner that the wheels 40, 42 generally follow the path of the tractor 16. Since the swath curtain 56 and the control cam arrangement 82 are fixedly connected to the wheel assembly 34 by means of the shaft 68, the swath curtain 56 is continuously maintained in the same position and orientation with respect to the depositing zone 86 of the path of the tines 50.

Additionally, Fig. 3A shows a swath curtain support 88, which is entirely optional and therefore not shown in the other figures. The swath curtain support 88 may carry some of the curtain forces and/or supports the outrigger arm 58. The frame beam 22 may slide with respect to the swath curtain support 88. The swath curtain support 88 comprises a rod 90 that extends substantially horizontally and/or may be fixedly connected to the coupling device 14.

Fig. 3B, 4B and 5B show the position of the lever 60 of Fig. 3A, 4A and 5A, respectively. In Fig. 3B, when the haymaking machine 10 travels along a straight line, the lever 60 is in the central position. In Fig. 4B and 5B, the lever 60 is swung out of the central position. The wheel assembly 34, and thus also the control cam arrangement 82 and the swath curtain 56, are biased by the spring 62 to the central position.

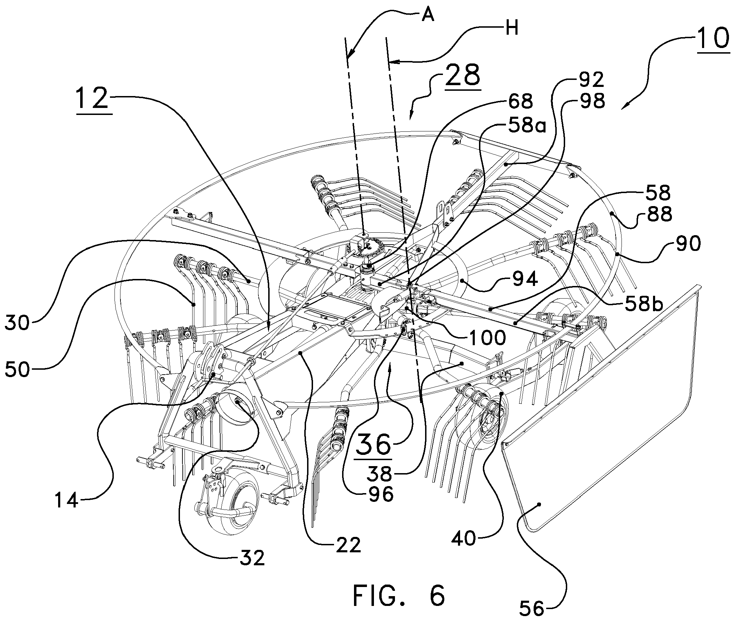

Fig. 6 shows another embodiment of a haymaking machine 10, which has a semicircular swath curtain support 88. The swath curtain support 88 comprises a semicircular rod 90, which, at a first end, is connected with the coupling device 14 and, at a second end, is connected to a cantilever 92, which extends in a direction opposite to the direction of travel.

Furthermore, a guiding ring 94, which also may be seen as a part of the swath curtain support 88 is mounted to the frame beam 22. The guiding ring 94 (similar to the rod 90) surrounds the rotation axis A in a circular manner and/or the outrigger arm 58 may slide with respect to the guiding ring 94. The guiding ring 94 carries a stop 96, which may be a pin that may be positioned in one of a series of holes provided in the guiding ring 94. The outrigger arm 58 comprises an inner arm portion 58a and an outer arm portion 58b connected by means of a hinge 98. The hinge 98 defines a pivot axis H which extends at a distance and substantially parallel to the rotation axis A.

When the tractor 16 enters a curve, the outrigger arm 58 with the swath curtain 56 fixedly connected thereto swivels about the rotation axis A with respect to the frame 12. The outrigger arm 58, which is fixedly connected to the shaft 68, swivels with respect to the frame beam 22 about the rotation axis A as long as the outer arm portion 58b is not in contact with the stop 96. When the outer arm portion 58b runs against the stop 96, it pivots with respect to the inner arm portion 58a about the pivot axis H of the hinge 98 so that the swath curtain 56 is prevented from swivelling further towards the coupling device 14. As the wheel assembly 34 swivels further, the swath curtain 56 stays behind with respect to the wheel assembly 34. Thereby, the swath curtain 56 is prevented from colliding with a rear wheel of the tractor 16.

A spring element 100 biases the inner arm portion 58a and the outer arm portion 58b of the outrigger arm 58 to an extended position in line with each other, which runs transversely to the direction of travel so that the swath curtain 56 has the desired lateral position and orientation. The stop 96 moves the outer arm portion 58b of the outrigger arm 58 against the biasing force of the spring element 100 when the tractor 16 enters a sharp curve as described above.

While the invention has been illustrated and described in detail in the drawings and foregoing description, such illustration and description are to be considered illustrative or exemplary and not restrictive. The scope of protection is defined by the claims, i.e. the invention is not limited to the disclosed embodiments. Other variations to the disclosed embodiments can be understood and effected by those skilled in the art and practising the claimed invention, from a study of the drawings, the disclosure, and the appended claims. Any reference signs in the claims should not be construed as limiting the scope.

## Claims

1. A haymaking machine (10), particularly for windrowing harvested agricultural crops, such as a rotary rake, the haymaking machine (10) comprising:
- a frame (12) having a coupling device (14) for coupling the haymaking machine (10) to a tractor (16);
- at least one rotor (28) being connected to the frame (12) in such a manner that the rotor (28) can be driven in rotation about a rotation axis (A), the rotor (28) comprising a rotor housing (80) and a plurality of tine arms (30) extending radially from the rotor housing (80) and carrying tines (50) at their outer ends,
- a shaft (68) extending through the rotor housing (80) and defining the rotation axis (A),
- a control cam arrangement (82) accommodated in the rotor housing (80) and fixedly connected to the shaft (68), the control cam arrangement (82) having a cam track, the tine arms (30) being connected to the cam track such that when the rotor (28) is driven in rotation the tine arms (30) rotate by means of the cam track (82) about their respective longitudinal axes for defining a predetermined depositing zone of a path of said tines (50) for depositing of raked products,
- a wheel assembly (34) fixedly attached to the shaft (68),
wherein the shaft (68), the control cam arrangement (82) and the wheel assembly (34), being fixedly connected to one another, form a swivel assembly (68, 82, 34) that can swivel about the rotation axis (A) with respect to the frame (12),
**characterised in that** the haymaking machine (10) comprises a windrowing deflector (56) extending along the depositing zone, the windrowing deflector (56) being fixedly connected to said swivel assembly (68, 82, 34) for maintaining the windrowing deflector (56) along the depositing zone when the swivel assembly (68, 82, 34) swivels about the rotation axis (A) with respect to the frame (12).

2. A haymaking machine as claimed in claim 1, wherein the coupling device of the frame (12) is configured to connect the frame (12) to the tractor in such a manner that the frame (12) cannot swivel laterally with respect to the tractor.

3. A haymaking machine as claimed in claim 1 or 2, wherein the coupling device of the frame (12) comprises a three point attachment device (14) mountable to a three point linkage of the tractor (16).

4. A haymaking machine as claimed in one or more of the preceding claims, wherein the windrowing deflector (56) comprises a deflector surface extending substantially parallel to the rotation axis (A).

5. A haymaking machine as claimed in claim 4, wherein the deflector surface extends substantially tangentially with respect to the path of the tines (50).

6. A haymaking machine as claimed in one or more of the preceding claims, wherein the windrowing deflector (56) is fixedly connected to the shaft (68) of the rotor (28).

7. A haymaking machine as claimed in claim 6, wherein the windrowing deflector (56) is fixedly connected to the shaft (68) by means of an outrigger arm projecting radially from the shaft (68).

8. A haymaking machine as claimed in one or more of the preceding claims, wherein the haymaking machine comprises a centring device for biasing the swivel assembly (68, 82, 34, 56) to a central position in alignment with a longitudinal direction of the frame.

9. A haymaking machine as claimed in claim 8, wherein the centring device comprises:
- a lever being fixedly connected to the swivel assembly and projecting radially from the rotation axis (A), wherein said lever in the central position of the swivel assembly extends in the longitudinal direction of the frame towards the coupling device, and
- a pretensioning element which is pretensioned between the lever and the frame.

10. A haymaking machine as claimed in claim 7, wherein the haymaking machine (10) comprises a stop (96) which is fixedly connected to the frame (12), and wherein the outrigger arm (58) comprises an inner arm portion (58a) and an outer arm portion (58b) pivotally connected by means of a hinge (98), such that, when the outrigger arm (58) abuts against the stop (96) due to a swivelling movement of the swivel assembly towards the coupling device (14), the outer arm portion pivots about the hinge (98) with respect to the inner arm portion.

11. A haymaking machine as claimed in claim 10, wherein the inner arm portion and the outer arm portion of the outrigger arm (58) are biased towards an extended position in line with one another.

12. A haymaking machine as claimed in one or more of the preceding claims, wherein the wheel assembly (34) comprises at least three or four wheels (40).

13. A haymaking machine as claimed in one or more of the preceding claims, wherein the tine arms (30) are bent in such a manner that the outer end of each tine arm (30) carrying the tines (52), when pivoted about its longitudinal axis to a position with substantially vertically extending tines (52), is situated below an inner end of said tine arm (30) being connected to the cam track (82).

14. A haymaking machine as claimed in one or more of the preceding claims, wherein the swivel assembly (68, 82, 34, 56) can be swivelled about the rotation axis (A) with respect to the frame (12) independently from any rotation of the rotor (28) about the rotation axis (A).

15. A method for windrowing harvested agricultural crops using a haymaking machine as claimed in one of the preceding claims.

## Patentansprüche

1. Heumachmaschine (10), insbesondere zum Schwaden geernteter Nutzpflanzen, wie beispielsweise ein Heuwender, wobei die Heumachmaschine (10) das Folgende aufweist:
- einen Rahmen (12) mit einer Koppelvorrichtung (14) zum Koppeln der Heumachmaschine (10) an einem Traktor (16);
- mindestens einen Rotor (28), der so mit dem Rahmen (12) verbunden ist, dass der Rotor (28) für eine Drehung um eine Rotationsachse (A) angetrieben werden kann, wobei der Rotor (28) ein Rotorgehäuse (80) und eine Mehrzahl von Zinkenarmen (30) aufweist, die sich radial von dem Rotorgehäuse (80) erstrecken und Zinken (50) an ihren äußeren Enden tragen,
- eine Welle (68), die sich durch das Rotorgehäuse (80) erstreckt und die Rotationsachse (A) definiert,
- eine Nockensteuerungsanordnung (82), die in dem Rotorgehäuse (80) aufgenommen und fest mit der Welle (68) verbunden ist, wobei die Nockensteuerungsanordnung (82) eine Nockenbahn besitzt, wobei die Zinkenarme (30) so mit der Nockenbahn verbunden sind, dass sich beim drehenden Antreiben des Rotors (28) die Zinkenarme (30) mittels der Nockenbahn (82) um ihre entsprechende Längsachsen drehen, um eine vorbestimmte Ablagezone eines Pfads der Zinken (50) zum Ablegen der gerechten Produkte zu definieren,
- eine fest mit der Welle (68) verbundene Radanordnung (34),
wobei die Welle (68), die Nockensteuerungsanordnung (82) und die Radanordnung (34), die fest miteinander verbunden sind, eine Schwenkanordnung (68, 82, 34) bilden, die um die Rotationsachse (A) relativ zu dem Rahmen (12) verschwenken kann,
**dadurch gekennzeichnet, dass** die Heumachmaschine (10) einen Schwaddeflektor (56) aufweist, der sich entlang der Ablagezone erstreckt, wobei der Schwaddeflektor (56) fest mit der Schwenkanordnung (68, 200, 34) verbunden ist, um den Schwaddeflektor (56) entlang der Ablagezone zu halten, wenn die Schwenkanordnung (68, 82, 34) relativ zu dem Rahmen (12) um die Rotationsachse (A) verschwenkt.

2. Heumachmaschine nach Anspruch 1, wobei die Kopplungsvorrichtung des Rahmens (12) zum Verbinden des Rahmens (12) mit dem Traktor in einer solchen Weise ausgebildet ist, dass der Rahmen (12) nicht seitlich relativ zu dem Traktor verschwenken kann.

3. Heumachmaschine nach Anspruch 1 oder 2, wobei die Kopplungsvorrichtung des Rahmens (12) eine Dreipunktbefestigungsanordnung (14) aufweist, die an einer Dreipunktaufhängung des Traktors (16) montierbar ist.

4. Heumachmaschine nach einem oder mehreren der vorhergehenden Ansprüche, wobei der Schwaddeflektor (56) eine Deflektoroberfläche aufweist, die sich im Wesentlichen parallel zu der Rotationsachse (A) erstreckt.

5. Heumachmaschine nach Anspruch 4, wobei sich die Deflektoroberfläche im Wesentlichen tangential zu dem Pfad der Zinken (50) erstreckt.

6. Heumachmaschine nach einem oder mehreren der vorhergehenden Ansprüche, wobei der Schwaddeflektor (56) fest mit der Welle (68) des Rotors (28) verbunden ist.

7. Heumachmaschine nach Anspruch 6, wobei der Schwaddeflektor (56) fest mit der Welle (68) mittels eines Auslegerarms verbunden ist, der radial von der Welle (68) hervorsteht.

8. Heumachmaschine nach einem oder mehreren der vorhergehenden Ansprüche, wobei die Heumachmaschine eine Zentriervorrichtung zum Beaufschlagen der Schwenkanordnung (68, 82, 34, 56) in eine zentrale Position ausgerichtet zu einer Längsrichtung des Rahmens aufweist.

9. Heumachmaschine nach Anspruch 8, wobei die Zentriervorrichtung Folgendes aufweist:
- einen Hebel, der fest mit der Schwenkanordnung verbunden ist und radial von der Rotationsachse (A) hervorsteht, wobei sich der Hebel in der zentralen Position der Schwenkanordnung in der Längsrichtung des Rahmens in Richtung der Kopplungsvorrichtung erstreckt, und
- ein Vorspannelement, das zwischen dem Hebel und dem Rahmen vorgespannt ist.

10. Heumachmaschine nach Anspruch 7, wobei die Heumachmaschine (10) einen Anschlag (96) aufweist, der fest mit dem Rahmen (12) verbunden ist, und wobei der Auslegerarm (58) einen inneren Armbereich (58a) und einen äußeren Armbereich (58b) aufweist, die mittels eines Gelenks (98) so schwenkbar miteinander verbunden sind, dass beim Anschlagen des Auslegerarms (58) an dem Anschlag (96) aufgrund einer Schwenkbewegung der Schwenkanordnung in Richtung der Kopplungsvorrichtung (14) der äußere Armbereich um das Gelenk (98) relativ zu dem inneren Armbereich verschwenkt.

11. Heumachmaschine nach Anspruch 10, wobei der innere Armbereich und der äußere Armbereich des Auslegerarms (58) in Richtung einer ausgestreckten Position und in Linie zueinander beaufschlagt werden.

12. Heumachmaschine nach einem oder mehreren der vorhergehenden Ansprüche, wobei die Radanordnung (34) mindestens drei oder vier Räder (40) aufweist.

13. Heumachmaschine nach einem oder mehreren der vorhergehenden Ansprüche, wobei die Zinkenarme (30) so gebogen sind, dass das äußere Ende jedes Zinkenarms (30), der/das die Zinken (52) trägt, beim Verschwenken um seine Längsachse in eine Position mit sich im Wesentlichen vertikal erstreckenden Zinken (52) unterhalb eines inneren Endes des Zinkenarms (30) angeordnet ist, das mit der Nockenbahn (82) verbunden ist.

14. Heumachmaschine nach einem oder mehreren der vorhergehenden Ansprüche, wobei die Schwenkanordnung (68, 82, 34, 56) um eine Rotationsachse (A) relativ zu dem Rahmen (12) unabhängig von einer Drehung des Rotors (28) um die Rotationsachse (A) verschwenkbar ist.

15. Verfahren zum Schwaden geernteter Nutzpflanzen unter Verwendung einer Heumachmaschine nach einem der vorhergehenden Ansprüche.

## Revendications

1. Machine de fenaison (10), en particulier pour javeler des cultures agricoles récoltées, telle qu'un râteau rotatif, la machine de fenaison (10) comprenant :
- un châssis (12) comportant un dispositif d'accouplement (14) pour coupler la machine de fenaison (10) à un tracteur (16) ;
- au moins un rotor (28) étant relié au châssis (12) de telle manière que le rotor (28) peut être entraîné en rotation autour d'un axe de rotation (A), le rotor (28) comprenant un carter de rotor (80) et une pluralité de bras à dents (30) s'étendant radialement depuis le carter de rotor (80) et comportant des dents (50) au niveau de leurs extrémités extérieures,
- un arbre (68) s'étendant à travers le carter de rotor (80) et définissant l'axe de rotation (A),
- un agencement de came de commande (82) logé dans le carter de rotor (80) et relié de manière fixe à l'arbre (68), l'agencement de came de commande (82) ayant une voie de came, les bras à dents (30) étant reliés à la voie de came de telle sorte que, lorsque le rotor (28) est entraîné en rotation, les bras à dents (30) tournent à l'aide de la voie de came (82) autour de leurs axes longitudinaux respectifs pour définir une zone de dépôt prédéterminée d'un chemin desdites dents (50) pour le dépôt de produits ratissés,
- un ensemble de roue (34) attaché de manière fixe à l'arbre (68),
dans laquelle l'arbre (68), l'agencement de came de commande (82) et l'ensemble de roue (34), reliés de manière fixe les uns aux autres, forment un ensemble tourillon (68, 82, 34) qui peut tourner autour de l'axe de rotation (A) par rapport au châssis (12),
**caractérisée en ce que** la machine de fenaison (10) comprend un déflecteur de javelage (56) s'étendant le long de la zone de dépôt, le déflecteur de javelage (56) étant relié de manière fixe audit ensemble tourillon (68, 82, 34) pour maintenir le déflecteur de javelage (56) le long de la zone de dépôt quand l'ensemble tourillon (68, 82, 34) tourne autour de l'axe de rotation (A) par rapport au châssis (12).

2. Machine de fenaison selon la revendication 1, dans laquelle le dispositif d'accouplement du châssis (12) est configuré pour relier le châssis (12) au tracteur de telle manière que le châssis (12) ne peut pas tourner latéralement par rapport au tracteur.

3. Machine de fenaison selon la revendication 1 ou 2, dans laquelle le dispositif d'accouplement du châssis (12) comprend un dispositif de fixation à trois points (14) pouvant être monté sur une tringlerie à trois points du tracteur (16).

4. Machine de fenaison selon une ou plusieurs des revendications précédentes, dans laquelle le déflecteur de javelage (56) comprend une surface de déflecteur s'étendant de manière sensiblement parallèle à l'axe de rotation (A).

5. Machine de fenaison selon la revendication 4, dans laquelle la surface de déflecteur s'étend de manière sensiblement tangentielle par rapport au chemin des dents (50).

6. Machine de fenaison selon une ou plusieurs des revendications précédentes, dans laquelle le déflecteur de javelage (56) est relié de manière fixe à l'arbre (68) du rotor (28).

7. Machine de fenaison selon la revendication 6, dans laquelle le déflecteur de javelage (56) est relié de manière fixe à l'arbre (68) à l'aide d'un bras stabilisateur se projetant radialement depuis l'arbre (68).

8. Machine de fenaison selon une ou plusieurs des revendications précédentes, dans laquelle la machine de fenaison comprend un dispositif de centrage pour appliquer l'ensemble tourillon (68, 82, 34, 56) vers une position centrale en alignement avec une direction longitudinale du châssis.

9. Machine de fenaison selon la revendication 8, dans laquelle le dispositif de centrage comprend :
- un levier étant relié de manière fixe à l'ensemble tourillon et se projetant radialement depuis l'axe de rotation (A), dans laquelle ledit levier dans la position centrale de l'ensemble tourillon s'étend dans la direction longitudinale du châssis vers le dispositif d'accouplement, et
- un élément de pré-tension qui est pré-tendu entre le levier et le châssis.

10. Machine de fenaison selon la revendication 7, dans laquelle la machine de fenaison (10) comprend une butée (96) qui est reliée de manière fixe au châssis (12), et dans laquelle le bras stabilisateur (58) comprend une portion de bras intérieure (58a) et une portion de bras extérieure (58b) reliées de manière pivotante à l'aide d'une charnière (98), de telle sorte que, lorsque le bras stabilisateur (58) vient s'appuyer contre la butée (96) en raison d'un déplacement tournant de l'ensemble tourillon vers le dispositif d'accouplement (14), la portion de bras extérieure pivote autour de la charnière (98) par rapport à la portion de bras intérieure.

11. Machine de fenaison selon la revendication 10, dans laquelle la portion de bras intérieure et la portion de bras extérieure du bras stabilisateur (58) sont appliquées vers une position étendue, alignées l'une avec l'autre.

12. Machine de fenaison selon une ou plusieurs des revendications précédentes, dans laquelle l'ensemble de roue (34) comprend au moins trois ou quatre roues (40).

13. Machine de fenaison selon une ou plusieurs des revendications précédentes, dans laquelle les bras à dents (30) sont pliés de telle manière que l'extrémité extérieure de chaque bras à dents (30) comportant les dents (52), lorsqu'elle est pivotée autour de son axe longitudinal jusqu'à une position à laquelle les dents (52) s'étendent de manière sensiblement verticale, est située sous une extrémité intérieure dudit bras à dents (30) reliée à la voie de came (82).

14. Machine de fenaison selon une ou plusieurs des revendications précédentes, dans laquelle l'ensemble tourillon (68, 82, 34, 56) peut tourner autour de l'axe de rotation (A) par rapport au châssis (12) indépendamment de toute rotation du rotor (28) autour de l'axe de rotation (A).

15. Procédé pour javeler des cultures agricoles récoltées en utilisant une machine de fenaison selon l'une des revendications précédentes.
